(19) Europäisches Patentamt
European Patent Office
Office européen des brevets

(11) **EP 4 394 992 A1**

(12) **EUROPEAN PATENT APPLICATION**
published in accordance with Art. 153(4) EPC

(43) Date of publication:
**03.07.2024 Bulletin 2024/27**

(21) Application number: **21966046.1**

(22) Date of filing: **02.12.2021**

(51) International Patent Classification (IPC):
**H01M 10/058** (2010.01)  **H01M 50/102** (2021.01)

(52) Cooperative Patent Classification (CPC):
**Y02E 60/10**

(86) International application number:
**PCT/CN2021/135125**

(87) International publication number:
**WO 2023/097614 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dongguan Amperex Technology
Limited
Dongguan City, Guangdong Province 523000
(CN)**

(72) Inventors:
• **YUANYIN, Mingyue
Dongguan, Guangdong 523000 (CN)**
• **YAN, Dongyang
Dongguan, Guangdong 523000 (CN)**
• **ZENG, Qiao
Dongguan, Guangdong 523000 (CN)**

(74) Representative: **Klunker IP
Patentanwälte PartG mbB
Destouchesstraße 68
80796 München (DE)**

(54) **BATTERY AND ELECTRONIC DEVICE**

(57)    This application relates to the field of battery technologies, and discloses a battery and an electronic apparatus. The battery includes a housing, an electrode assembly, and tabs. The housing includes a first end wall, a second end wall, and a connecting wall portion. Both the first end wall and the second end wall are L-shaped and spaced apart in a thickness direction of the battery. The connecting wall portion extends from an edge of the first end wall toward the second end wall and encloses an L-shaped accommodating cavity, where the first end wall is provided as one end of the accommodating cavity, and the second end wall is provided as another end of the accommodating cavity. The housing of the battery according to embodiments of this application is L-shaped. Therefore, when the housing is used for an electronic apparatus having an L-shaped battery compartment, two parts bent to each other in the battery can be filled in two chambers of the L-shaped battery compartment respectively, so as to better use the L-shaped battery compartment. In other words, the battery according to some embodiments of this application can improve the current situation that the L-shaped battery compartment in the electronic apparatus cannot be well used for batteries.

FIG. 5

**Description**

**TECHNICAL FIELD**

Embodiments of this application relate to the field of battery technologies, and in particular, to a battery and an electronic apparatus.

**BACKGROUND**

A battery is an apparatus that converts external energy into electric energy and that stores the electric energy in the battery, to supply power to an external device (for example, a portable electronic device) as needed. At present, batteries are widely used in electronic apparatuses such as mobile phones, tablets, notebook computers, and electric vehicles.

Currently, batteries are generally rectangular or circular, and correspondingly, electronic apparatuses are provided with rectangular or circular battery compartments to accommodate these batteries. However, in some electronic apparatuses, after other electronic components of the electronic apparatuses are appropriately arranged, the battery compartments may be L-shaped. Such a battery compartment includes a first chamber and a second chamber that are bent relative to each other. In this case, although the rectangular or circular batteries can be accommodated in the battery compartment by adjusting their size specifications, they can only be accommodated in either the first chamber or the second chamber, resulting in a waste of space in the battery compartment.

**SUMMARY**

Embodiments of this application are intended to provide a battery and an electronic apparatus, so as to improve a current situation that an L-shaped battery compartment in an electronic apparatus cannot be well used for batteries and to enhance safety performance.

According to a first aspect, the following technical solution is used in some embodiments of this application to solve the technical problem. The solution specifically includes the following.

A battery is provided, including a housing, an electrode assembly, and tabs. The housing includes a first end wall, a second end wall, and a connecting wall portion. Both the first end wall and the second end wall are L-shaped and spaced apart in a thickness direction of the battery. The connecting wall portion extends from an edge of the first end wall toward the second end wall and encloses an L-shaped accommodating cavity, where the first end wall is provided as one end of the accommodating cavity, and the second end wall is provided as another end of the accommodating cavity. The connecting wall portion includes a plurality of wall portion units, and the plurality of wall portion units are arranged sequentially along a contour of the edge of the first end wall. The electrode assembly is L-shaped; the electrode assembly includes an anode plate, a cathode plate, and a separator, and the anode plate and the cathode plate are stacked alternately in the thickness direction, with an edge of the anode plate surrounding a projection of the cathode plate on the anode plate, where the separator is disposed between the anode plate and the cathode plate. The plurality of wall portion units include a preset wall portion unit, a side edge of the anode plate opposite to the preset side wall unit is spaced apart from the opposite preset wall portion unit by a first distance; the side edge of the anode plate opposite to the preset wall portion unit extends beyond the cathode plate by a second distance, and a ratio of the first distance to the second distance corresponding to the preset side wall unit ranges from 1/5 to 1/2, where the second distance ranges from 0.7 mm to 1.5 mm.

The entire housing of the battery according to some embodiments of this application is L-shaped. Therefore, when the housing is used for an electronic apparatus having an L-shaped battery compartment, two parts bent to each other in the battery according to some embodiments of this application can be filled in two chambers of the L-shaped battery compartment respectively, so as to better use the L-shaped battery compartment. In other words, the battery according to some embodiments of this application can improve the current situation that the L-shaped battery compartment in the electronic apparatus cannot be well used for batteries.

In some embodiments, the connecting wall portion includes a first wall portion unit, a second wall portion unit, a third wall portion unit, a fourth wall portion unit, a fifth wall portion unit, and a sixth wall portion unit. The first wall portion unit, the second wall portion unit, and the third wall portion unit extend along a first direction, the first wall portion unit, the second wall portion unit, and the third wall portion unit are spaced apart from each other sequentially in a second direction, a length of the third wall portion unit extending along the first direction is greater than lengths of the first wall portion unit and the second wall portion unit extending along the first direction, and the tab extends out of the housing from the first wall portion unit, where both the first direction and the second direction are perpendicular to the thickness direction, and the first direction intersects the second direction. The fourth wall portion unit, the fifth wall portion unit, and the sixth wall portion unit extend along the second direction, the fourth wall portion unit, the fifth wall portion unit, and the sixth wall portion unit are spaced apart from each other sequentially in the first direction, and a length of the sixth wall portion unit in the second direction is greater than lengths of the fourth wall portion unit and the fifth wall portion unit extending along the second direction.

In a further improvement of the foregoing technical solution, at least one of the second wall portion unit, the third wall portion unit, the fourth wall portion unit, the fifth wall portion unit, or the sixth wall portion unit is the preset wall portion unit.

In some embodiments, the housing further includes a sealing portion extending from the connecting wall portion, where at least a part of the sealing portion is bent to extend toward the first end wall, and the sealing portion includes a second side wall unit and a third side wall unit. The second side wall unit extends from the second wall portion unit toward the first end wall. The third side wall unit extends from the third wall portion unit toward the first end wall.

In some embodiments, the anode plate has a second side edge opposite to the second wall portion unit, a distance between the second side edge and an outer surface of the second side wall unit is $G_2$, the second side edge extends beyond the cathode plate by a distance $D_2$, and $1/3 \leq G_2/D_2 \leq 4/5$, where $0.7\ mm \leq D_2 \leq 1.5\ mm$; and/or the anode plate has a third side edge opposite to the third wall portion unit, a distance between the third side edge and an outer surface of the third side wall unit is $G_3$, the third side edge extends beyond the cathode plate by a distance $D_3$, and $1/3 \leq G_3/D_3 \leq 4/5$, where $0.7\ mm \leq D_3 \leq 1.5\ mm$.

In some embodiments, the sealing portion further includes a fourth side wall unit and a sixth side wall unit. The fourth side wall unit extends from the fourth wall portion unit toward the first end wall; and the sixth side wall unit extends from the sixth wall portion unit toward the first end wall.

In some embodiments, the anode plate has a fourth side edge opposite to the fourth wall portion unit, a distance between the fourth side edge and an outer surface of the fourth side wall unit is $G_4$, the fourth side edge extends beyond the cathode plate by a distance $D_4$, and $1/3 \leq G_4/D_4 \leq 4/5$, where $0.7\ mm \leq D_4 \leq 1.5\ mm$; and/or the anode plate has a sixth side edge opposite to the sixth wall portion unit, a distance between the sixth side edge and an outer surface of the sixth side wall unit is $G_6$, the sixth side edge extends beyond the cathode plate by a distance $D_6$, and $1/3 \leq G_6/D_6 \leq 4/5$, where $0.7\ mm \leq D_6 \leq 1.5\ mm$.

In some embodiments, the sealing portion further includes a first curved side wall unit, the second side wall unit is connected to the fourth side wall unit through the first curved side wall unit, a radius $R_1$ of the first curved side wall unit satisfies $0.85(G_2 + D_2) \leq R_1 \leq 1.0(G_2 + D_2)$, and the second side edge is connected to the fourth side edge through a first curved portion; and/or the sealing portion further includes a second curved side wall unit, the third side wall unit is connected to the fourth side wall unit through the second curved side wall unit, a radius $R_2$ of the second curved side wall unit satisfies $0.85(G_3 + D_3) \leq R_2 \leq 1.0(G_3 + D_3)$, the anode plate has the third side edge opposite to the third wall portion unit, and the third side edge is connected to the fourth side edge through a second curved portion; and/or the sealing portion further includes a third curved side wall unit, the third side wall unit is connected to the sixth side wall unit through the third curved side wall unit, a radius $R_3$ of the first curved side wall unit satisfies $0.85(G_3 + D_3) \leq R_3 \leq 1.0(G_3 + D_3)$, and the third side edge is connected to the sixth side edge through a third curved portion.

In some embodiments, a first distance between the second side edge and the second wall portion unit is $L_2$, and a thickness T of the connecting wall portion satisfies: $1/7 \leq T/L_2 \leq 1/3$; and/or $1/25 \leq T/G_2 \leq 3/10$.

In some embodiments, the part of the sealing portion bent to extend toward the first end wall is adhesively fixed to the connecting wall portion.

According to a second aspect, the following technical solution is further used in some embodiments of this application to solve the technical problem. The solution specifically includes:
an electronic apparatus including the battery.

**BRIEF DESCRIPTION OF DRAWINGS**

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.

FIG. 1 is a front view of a battery according to an embodiment of this application;
FIG. 2 is a bottom view of the battery in FIG. 1;
FIG. 3 is a schematic cross-sectional diagram of the battery in FIG. 1 along line A-A;
FIG. 4 is a schematic cross-sectional diagram of the battery in FIG. 1 along line B-B;
FIG. 5 is a schematic cross-sectional diagram of the battery in FIG. 2 along line C-C;
FIG. 6 is a front view of a battery according to another embodiment of this application;
FIG. 7 is a front view of a battery according to still another embodiment of this application;
FIG. 8 is a front view of a battery according to yet another embodiment of this application; and

FIG. 9 is a schematic diagram of an electronic apparatus according to an embodiment of this application.

In which:

1. battery;
100. housing; 110. first end wall; 120. second end wall; 130. connecting wall portion; 140. sealing portion; 131. first wall portion unit; 132. second wall portion unit; 133. third wall portion unit; 134. fourth wall portion unit; 135. fifth wall portion unit; 136. sixth wall portion unit; 137. seventh wall portion unit; 139. wall portion unit; 141. first side wall unit; 142. second side wall unit; 143. third side wall unit; 144. fourth side wall unit; 145. fifth side wall unit; 146. sixth side wall unit; 147. first curved side wall unit; 148. second curved side wall unit; 149. third curved side wall unit; 101. accommodating cavity;
200. electrode assembly; 210. anode plate; 220. cathode plate; 230. separator; 211. first side edge; 212. second side edge; 213. third side edge; 214. fourth side edge; 215. fifth side edge; 216. sixth side edge; 217. seventh side edge; 218a. first curved portion; 218b. second curved portion; 218c. third curved portion; 231. separator unit;
300. tab; and
2. electronic apparatus.

## DETAILED DESCRIPTION

For ease of understanding this application, the following further describes this application in detail with reference to the accompanying drawings and specific embodiments. It should be noted that when an element is referred to as being "fixed to", "fastened to", or "mounted to" another element, it may be directly fixed to the another element, or there may be one or more elements therebetween. When an element is referred to as being "connected to" another element, it may be directly connected to the another element, or there may be one or more elements therebetween. The terms "perpendicular", "horizontal", "left", "right", "inside", "outside", and similar expressions used herein are merely for description purposes.

Unless otherwise defined, all technical and scientific terms used herein shall have the same meanings as commonly understood by persons skilled in the art to which this application belongs. The terms used in the specification of this application are for description of specific embodiments only without any intention to limit this application. The term "and/or" used herein includes any and all combinations of one or more associated items listed.

In addition, technical features involved in different embodiments of this application that are described below may be combined as long as they do not conflict with each other.

In this specification, "mounting" includes fixing or limiting an element or apparatus to a specific position or place by welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in some embodiments of this application.

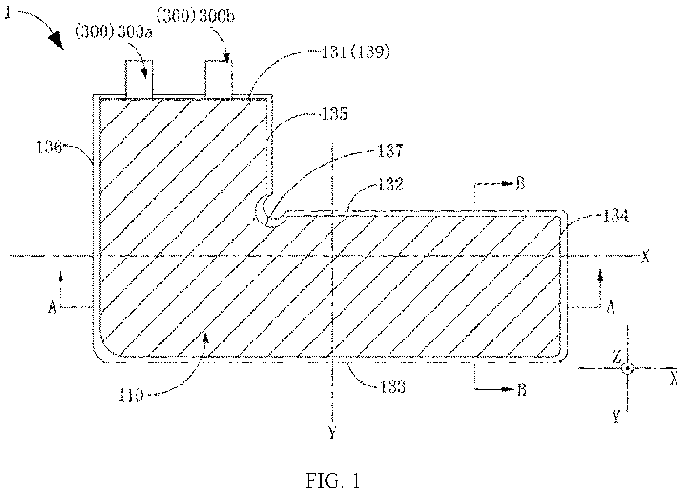

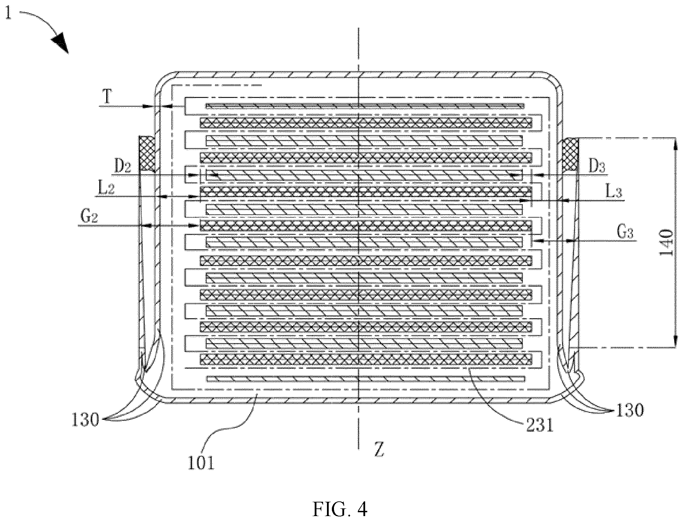

FIG. 1 to FIG. 4 are a front view and a bottom view of a battery 1, a schematic cross-sectional diagram of the battery along line A-A shown in the figure, and a schematic cross-sectional diagram of the battery along line B-B according to an embodiment of this application, respectively. The battery 1 includes a housing 100, an electrode assembly 200, and tabs 300. The housing 100 is provided with an accommodating cavity 101, the electrode assembly 200 is accommodated in the accommodating cavity 101, and the tabs 300 are connected to the electrode assembly 200 with one end extending out of the housing 100. The following describes specific structures of the housing 100, the electrode assembly 200, and the tab 300 in sequence.

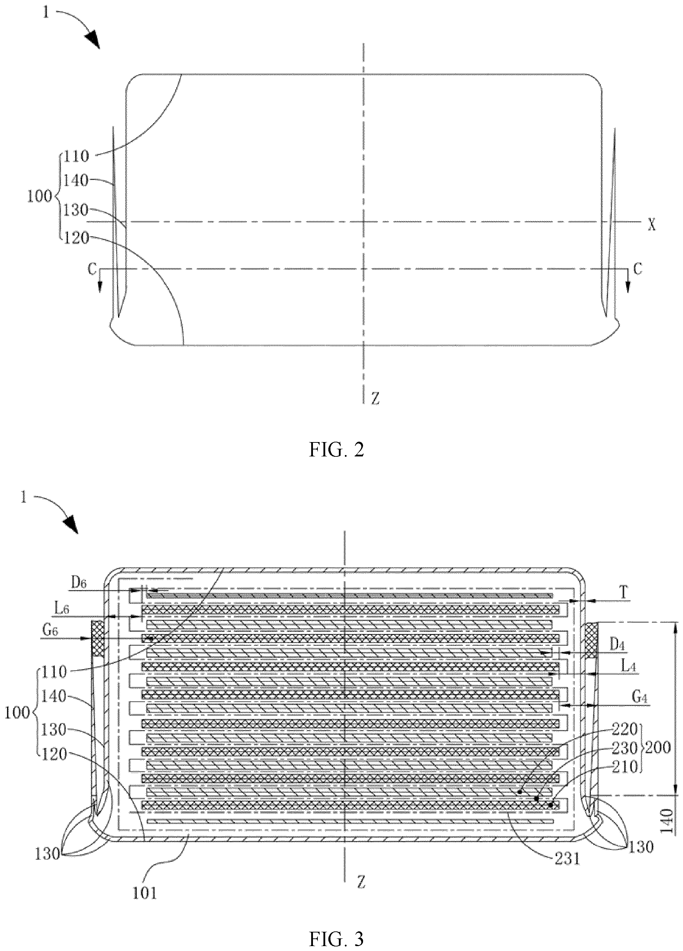

For the housing 100, specifically referring to FIG. 3 and with reference to FIG. 1 and FIG. 2, the housing 100 includes a first end wall 110, a second end wall 120, and a connecting wall portion 130. The first end wall 110 and the second end wall 120 are both L-shaped and spaced apart relative to each other in a thickness direction Z of the battery 1 shown in the figure. The connecting wall portion 130 extends from an edge of the first end wall 110 toward the second end wall 120, and the connecting wall portion 130 itself encloses an L-shaped accommodating cavity 101. The first end wall 110 is provided as one end of the accommodating cavity 101, and the second end wall 120 is provided as another end of the accommodating cavity 101.

Specifically referring to FIG. 1 and with reference to other accompanying drawings, the connecting wall portion 130 includes a plurality of wall portion units 139, and the plurality of wall portion units 139 are arranged sequentially along a contour of the edge of the first end wall 110. Specifically, viewed from the thickness direction Z, the plurality of wall portion units 139 specifically include a first wall portion unit 131, a second wall portion unit 132, and a third wall portion unit 133 that extend along a first direction X shown in the figure, and a fourth wall portion unit 134, a fifth wall portion unit 135, and a sixth wall portion unit 136 that extend along a second direction Y shown in the figure. The first wall portion unit 131 is a wall portion unit for the tabs 300 to extend. The first wall portion unit 131, the second wall portion unit 132, and the third wall portion unit 133 are spaced apart from each other sequentially in the second direction Y shown in the figure, and a length of the third wall portion unit 133 extending along the first direction X is greater than lengths of the first wall portion unit 131 and the second wall portion unit 132 extending along the first direction X. In other words, viewed from the thickness direction Z, the third wall portion unit 133 determines one of length or width of the battery 1. The fourth wall portion unit 134, the fifth wall portion unit 135, and the sixth wall portion unit 136 are spaced apart from each other sequentially along the first direction X. The fourth wall portion unit 134 is located between the second wall portion unit 132 and the third wall portion unit 133, the fifth wall portion unit 135 is located between the first wall portion unit 131 and the second wall portion unit 132, and the sixth wall portion unit 136 is located between the first wall portion unit 131 and the third wall portion unit 133. A length of the sixth wall portion unit 136 extending along the second direction Y is greater than lengths of the fourth wall portion unit 134 and the fifth wall portion unit 135 extending along the second direction Y In other words, viewed from the thickness direction Z, the sixth wall portion unit 136 determines the other of length or width of the battery 1. It should be noted that in this embodiment, any two of the first direction X, the second direction Y, and the thickness direction Z are perpendicular to each other. However, this application is not limited thereto, provided that both the first direction X and the second direction Y are perpendicular to the thickness direction Z and the first direction X intersects the second direction Y

Preferably, in addition to the first to sixth wall portion units, the connecting wall portion 130 in this embodiment further includes a curved seventh wall portion unit 137. Specifically, the seventh wall portion unit 137 is connected between the second wall portion unit 132 and the fifth wall portion unit 135, and is recessed inward toward the accommodating cavity 101. The provision of the seventh wall portion unit 137 can facilitate positioning and installation of the battery 1 in an electronic apparatus. In addition, the seventh wall portion unit 137 is recessed inward to form an arc, which can avoid a right-angled transition between the second wall portion unit 132 and the fifth wall portion unit 135, thereby improving tensile performance of the battery 1 at that position to some extent. Specifically, in other embodiments, the second wall portion unit 132 and the fifth wall portion unit 135 may be connected through a right-angled transition. As compared with the manner of right-angled transition, in this embodiment, with the seventh wall portion unit 137 provided, the size and length of the connecting wall portion 130 at that position can be relatively increased without increasing the volume of the battery 1. Therefore, even if the battery 1 is subjected to a bending or twisting force surrounding the thickness direction Z shown in FIG. 1, the seventh wall portion unit 137 can alleviate the tensile force received by the second wall portion unit 132 and the fifth wall portion unit 135 and the degree of deformation. In addition, the seventh wall portion unit 137 and the second wall portion unit 132 (and the fifth wall portion unit 135) are connected through an obtuse angle, which also avoids the disadvantage of large stress caused by a sharp right-angled transition with the second wall portion unit 132. Certainly, in other embodiments of this application, the seventh wall portion unit 137 may alternatively be omitted.

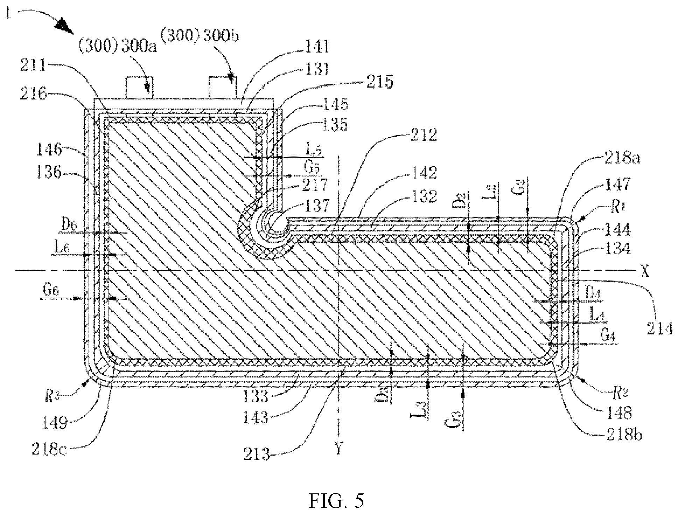

Referring to FIG. 5 which is a schematic cross-sectional diagram of the battery 1 in FIG. 2 along line C-C, and with reference to other accompanying drawings, in this embodiment, the battery 1 is a pouch battery. Correspondingly, the housing 100 further includes a sealing portion 140, and the sealing portion 140 is a portion for sealing after the housing 100 accommodates the electrode assembly 200. Specifically, the sealing portion 140 extends from an end of the connecting wall portion 130 close to the second end wall 120, and at least a part of the sealing portion 140 is bent to face toward the first end wall 110, so as to reduce the volume occupied by the entire battery 1, and to form a side wall of the battery 1 together by stacking the sealing portion 140 and the connecting wall portion 130, thereby reducing the risk of the side wall of the battery 1 being punctured. It can be understood that in other embodiments of this application, the sealing portion 140 may alternatively extend from a middle region of the connecting wall portion 130, and at least a part of the sealing portion 140 is bent toward the first end wall 110. More specifically, the sealing portion 140 includes a first side wall unit 141, a second side wall unit 142, a third side wall unit 143, a fourth side wall unit 144, a fifth side wall unit 145, and a sixth side wall unit 146. The first side wall unit 141 extends from an outer surface of the first wall portion unit 131 in a direction leaving the accommodating cavity 101, and clamps the tabs 300. The second side wall unit 142 extends from an outer surface of the second wall portion unit 132 toward the first end wall 110. The third side wall unit 143 extends from an outer surface of the third wall portion unit 133 toward the first end wall 110. The fourth side wall unit 144 extends from an outer surface of the fourth wall portion unit 134 toward the first end wall 110. The fifth side wall unit 145 extends from an outer surface of the fifth wall portion unit 135 toward the first end wall 110. The sixth side wall unit 146 extends from an outer surface of the sixth wall portion unit 136 toward the first end wall 110. In other words, except for the first side wall unit 141, the remaining parts of the sealing portion 140 extend from the connecting wall portion 130 and then are bent toward the first end wall 110. In this embodiment, the part of the sealing portion 140 bent to extend toward the first end wall 110 is adhesively fixed to the connecting wall portion 130 to form the side wall of the battery 1 together with the connecting wall portion 130. The sealing portion 140 may be adhesively fixed using a method such as dispensing, spraying glue, or attaching adhesive paper to the sealing portion 140 and/or the connecting wall portion 130, which is not described in detail herein. The sealing portion 140 may be a single layer as shown in FIG. 3, or may be folded into two layers or other layers at an end away from the second end wall 120, and bonded to the connecting wall portion 130.

It should be noted that the connecting wall portion 120 does not keep extending along the thickness direction Z shown in the figure. Referring to FIG. 3, the connecting wall portion 130 is continuously bent at the end close to the second end wall 120. Specifically, in this embodiment, the housing 100 includes two composite sheets, and the composite sheet includes a polymer material layer, a metal material layer, and a protective layer that are stacked sequentially. For ease of description, the following defines the two composite sheets as a first composite sheet and a second composite sheet respectively. A middle region of the first composite sheet is recessed to form a cavity portion with a recess, and an edge region of the first composite sheet surrounds the recess to form a protruding portion. Optionally, the cavity portion of the first composite sheet is formed by stamping. An edge of the second composite sheet is fitted to the protruding portion and is hermetically fixed by heat fusion to form a sealing region. Part of the sealing region is bent toward the cavity portion to form the housing 100. The first end wall 110 includes a bottom wall of the cavity portion of the first composite sheet, and the second end wall 120 includes a portion of the second composite sheet opposite to the bottom wall. The connecting wall portion 130 includes a side wall of the cavity portion of the first composite sheet, a portion of the second composite sheet that is not heat-fused and that is close to the sealing region, and a portion of the sealing region close to the side wall of the cavity portion, for example, a 2 mm region range of an end of the sealing region close to the cavity portion. The sealing portion includes other regions in the sealing region. Material selection for the composite sheet is diverse. For example, in some embodiments, the metal material layer includes aluminum foil or steel foil, the protective layer may include polyethylene glycol terephthalate, and the polymer material layer may include polyethylene and/or polypropylene. Structure of the composite sheet is not specifically limited in this application.

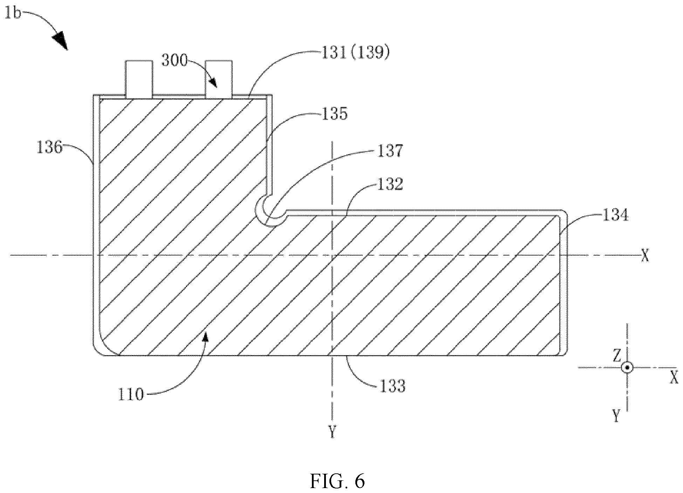

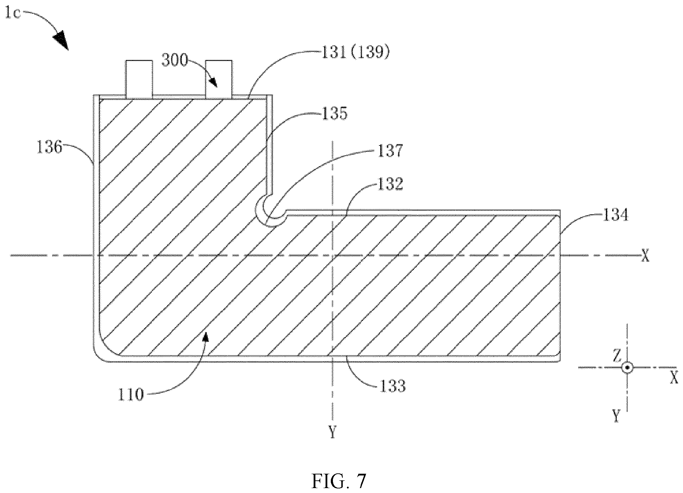

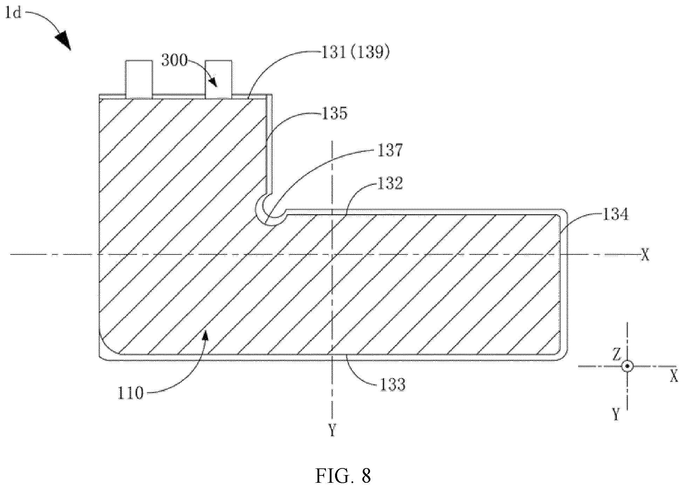

It should be understood that even if the housing 100 in this embodiment is formed by two composite sheets, in other embodiments, the housing 100 may alternatively be formed by a single composite sheet. For example, referring to FIG. 6 which is a schematic diagram of a battery 1b according to another embodiment of this application. Different from the battery 1, a first composite sheet and a second composite sheet of a housing of the battery 1b are formed by bending a same sheet, and specifically, are integrally connected at a second end wall and a third wall portion unit 133, rather than being fixed by heat fusion of the sheet. In other words, the housing is provided with no sealing portion at the third wall portion unit 133. For another example, referring to FIG. 7 which is a schematic diagram of a battery 1c according to still another embodiment of this application. Different from the battery 1, a first composite sheet and a second composite sheet of a housing of the battery 1c are formed by bending a same sheet, and specifically, are integrally connected at a second end wall and a fourth wall portion unit, rather than being fixed by heat fusion of the sheet. In other words, no sealing portion is provided at the fourth wall portion unit. For another example, referring to FIG. 8 which is a schematic diagram of a battery 1d according to yet another embodiment of this application. Different from the battery 1, a first composite sheet and a second composite sheet of a housing of the battery 1d are formed by bending a same sheet, and specifically, are integrally connected at a second end wall and a sixth wall portion unit, rather than being fixed by heat fusion of the sheet. In other words, no sealing portion is provided at the sixth wall portion unit.

For the electrode assembly 200, still referring to FIG. 3 to FIG. 5 and with reference to other accompanying drawings, the electrode assembly 200 includes an anode plate 210, a cathode plate 220, and a separator 230. Both the anode plate 210 and the cathode plate 220 are L-shaped. The electrode assembly 200 includes the anode plate 210 and the cathode plate 220, and the anode plate 210 and the cathode plate 220 are stacked alternately in the thickness direction Z. A size of the anode plate 210 is slightly larger than that of the cathode plate 220, and a contour of an edge of the anode plate 210 extends beyond a contour of an edge of an adjacent cathode plate 220. In other words, in the stacked state, a projection of the cathode plate 220 on the anode plate 210 is surrounded by the anode plate 210, so as to reduce the risk of lithium precipitation. The separator 230 is provided between an adjacent anode plate 210 and cathode plate 220. In this embodiment, the electrode assembly 200 includes a plurality of anode plates 210 and a plurality of cathode plates 220. The separator 230 is continuously bent in a Z shape, and forms a plurality of separator units 231 that are spaced apart from each other sequentially in the thickness direction Z shown in the figure. Each separator unit 231 separates the adjacent anode plate 210 and cathode plate 220. Certainly, in other embodiments of this application, the separator 230 may alternatively be a flat sheet instead of in a continuously bent shape. In this case, one separator 230 is provided between each adjacent anode plate 210 and cathode plate 220.

The anode plate 210 includes a first side edge 211, a second side edge 212, a third side edge 213, a fourth side edge 214, a fifth side edge 215, a sixth side edge 216, and a seventh side edge 217. These side edges correspond to the first wall portion unit 131, the second wall portion unit 132, the third wall portion unit 133, the fourth wall portion unit 134, the fifth wall portion unit 135, the sixth wall portion unit 136, and the seventh wall portion unit 137 sequentially. The seventh side edge 217 follows the seventh wall portion unit 137 and is recessed inward relative to the adjacent second side edge 212 and fifth side edge 215. In this embodiment, the seventh side edge 217 is recessed inward to form an arc. Similarly, the provision of the seventh side edge can improve tensile performance and bending resistance of the anode plate 210.

For the tab 300, referring to FIG. 5 and with reference to FIG. 1, the entire tab 300 is a flat rectangle. One end of the tab 300 is connected to the electrode assembly 200, and the other end extends out of the housing 100 from the first wall portion unit 131. In this embodiment, the battery 1 includes two tabs 300, namely, a first tab 300a and a second tab 300b. The first tab 300a is connected to each anode plate 210, and the second tab 300b is connected to each cathode plate 220. Specifically, the first tab 300a includes a first conductive portion and a second conductive portion. The first conductive portion includes a plurality of first conductive sheets, and the first conductive sheet is formed by extending from an edge of the anode plate 210. The first conductive sheets are stacked and fixedly connected by welding and the like to form the first conductive portion. A first end of the second conductive portion is connected to the first conductive portion, and a second end extends out of the housing 100. The second end of the second conductive portion is the end of the tab 300 extending out of the housing 100 mentioned above. Similarly, the second tab 300b includes a third conductive portion and a fourth conductive portion. The third conductive portion includes a plurality of second conductive sheets, and the second conductive sheet is formed by extending from an edge of the cathode plate 220. The second conductive sheets are stacked and fixedly connected by welding and the like to form the third conductive portion. A first end of the fourth conductive portion is connected to the third conductive portion, and a second end extends out of the housing 100. The second end of the fourth conductive portion is the end of the tab 300 extending out of the housing 100 mentioned above.

During transportation or use of batteries, it is inevitable for drops or collisions with other objects, and especially, in extreme cases, the entire electrode assembly 200 may crack into two parts along a certain direction under a sudden impact. These two parts may move away from each other and squeeze outward the side wall of the housing 100 under the remaining impact energy, and then puncture the housing 100; or cause the risk of short circuit due to the separator being punctured. Therefore, battery manufacturers typically perform impact tests, generally referred to as impact testing in the industry, on batteries before delivery. Generally, the impact test includes crack tests that simulate two environments where the electrode assembly 200 cracks into two parts in a first direction X and cracks into two parts in a second direction Y Next, the test where the electrode assembly 200 cracks into two parts in a second direction Y is used as an example. The test method specifically includes the following steps.

S1: Place a round bar for the test. Specifically, a round bar is placed at a preset height above the battery 1 and arranged to extend along the first direction X, and it is ensured that when viewed from the thickness direction, the round bar is located between the second wall portion unit 132 and the third wall portion unit 133.

S2: Release the round bar to make it fall onto the battery 1, such that the battery 1 is subjected to an impact force.

S3: Repeat steps S1 and S2 and observe whether the battery 1 passes the test. The passing condition for the test is that after steps S1 and S2 are repeated for a specified number of times, the housing 100 of the battery 1 is not punctured and the electrode assembly 200 of the battery 1 does not experience short circuit. In other words, if the housing has been punctured or the electrode assembly 200 has experienced short circuit before the specified number of repetitions of the foregoing steps are completed, the battery 1 fails the test, and the test needs to be stopped immediately.

S4: Test 20 batteries using step S3 and record the number of batteries that pass the test.

For ease of description and understanding, a distance between any one of the first to sixth side edges and an outer surface of the opposite wall portion unit is defined as a first distance $L_n$ ($n \geq 1$). A distance by which any one of the first to sixth side edges extends beyond the cathode plate is defined as a second distance $D_n$ ($n \geq 1$). A distance between any one of the first to sixth side edges and an outer surface of the opposite side wall unit is defined as a third distance $G_n$ ($n \geq 1$). For the measurement manner of the first distance $L_n$, the second distance $D_n$, and the third distance $G_n$ during the experiment, a CT image can be taken, measurement is performed in the CT image, and the measurement results are converted into actual dimensions.

First, the inventors tested different combinations of the first distance $L_2$ and the second distance $D_2$ to observe the test results. The first distance $L_2$ is a distance between the second side edge 212 and an outer surface of the second wall portion unit 132, and the second distance $D_2$ is a distance by which the second side edge 212 extends beyond the cathode plate 220. To obtain more significant test results and expedite the testing process, the first distance $L_3$ is kept consistent with the first distance $L_2$, and the second distance $D_3$ is kept consistent with the second distance $D_2$. The first distance $L_3$ is a distance between the third side edge 213 and an outer surface of the third wall portion unit 133, and the second distance $D_3$ is a distance by which the third side edge 213 extends beyond the cathode plate 220.

Table 1 shows influence of different combinations of the first distance $L_2$ and the second distance $D_2$ and different combinations of the first distance $L_3$ and the second distance $D_3$ on anti-collision performance of the battery. From the data in Table 1 and the test method of controlling variables, it can be learned that if the factors such as the second distance $D_2$ and the second distance $D_3$ are considered as constants for observation, that is, the factors such as the second distance $D_2$ and the second distance $D_3$ are considered as irrelevant variables, and the first distance $L_2$ and the first distance $L_3$ are considered as independent variables, and observed with reference to different groups, when a ratio of the first distance $L_2$ to the second distance $D_2$ ranges from 1/5 to 1/2, significantly more batteries 1 pass the test, which indicates better anti-collision performance of the battery 1. Specifically, when $L_2/D_2 < 1/5$, after the test round bar falls onto the battery 1, the electrode assembly 200 at least partially cracks into two parts opposite along the second direction Y, and these two parts move away from each other along the second direction Y and puncture the second wall portion unit 132 and the third wall portion unit 133 in a short time. When $L_2/D_2 > 1/2$, after the test round bar falls onto the battery 1, the electrode assembly 200 at least partially cracks into two parts, and these two parts move away from each other along the second direction Y Because $L_2$ (or $L_3$) is larger, the probability of puncturing the housing 100 is smaller as compared with the former. However, the time for these two parts to move away from each other to come into contact with the corresponding wall portion unit is long, so the anode plates 210 and the cathode plates 220 may locally wrinkle due to the relative movement in the process, and puncture the separator 230, resulting in short circuit of the battery 1. In comparison, when $1/5 \le L_2/D_2 \le 1/2$, the probabilities of the foregoing two cases are relatively low, so the battery 1 with such setting has better anti-collision performance.

If the ratio of the first distance $L_2$ to the second distance $D_2$ is considered as a constant for observation and the second distance $D_2$ is considered as an independent variable, when the size of the second distance $D_2$ ranges from 0.7 mm to 1.5 mm, significantly more batteries 1 pass the test, which indicates better anti-collision performance of the battery 1. Specifically, when $D_2 < 0.5$ mm, there is a very short time difference between the anode plate 210 and the cathode plate 220 coming into contact with the second wall portion unit 132 (or the third wall portion unit 133). This means that the second wall portion unit 132 (or the third wall portion unit 133) is almost simultaneously subjected to the impact forces from the anode plate 210 and the cathode plate 220, resulting in a higher risk of being punctured. Therefore, fewer batteries pass the test. When $D_2 > 1.5$ mm, there is a larger distance between the edges of the anode plate 210 and the cathode plate 220. In other words, before the cathode plate 220 comes into contact with the second wall portion unit 132 (or the third wall portion unit 133), the cathode plate 220 has a longer movement time, which increases the risk of short circuit caused by the anode plate 210 and the cathode plate 220 wrinkling and puncturing the separator 230. Therefore, fewer batteries 1 pass the test as well. In comparison, when 0.5 mm $< D_2 < 1.5$ mm, there is a longer time difference between the anode plate 210 and the cathode plate 220 coming into contact with the second wall portion unit 132 (or the third wall portion unit 133). This can limit the time for the cathode plate 220 to move to the second wall portion unit 132 (or the third wall portion unit 133) to being shorter to some extent. Therefore, the battery 1 with such setting has better anti-collision performance.

In conclusion, when the second distance ranges from 0.7 mm to 1.5 mm and the ratio of the first distance to the second distance ranges from 1/5 to 1/2, the battery 1 has excellent anti-collision performance.

**Table 1 Influence of different combinations of first distance $L_2$ and second distance $D_2$ and different combinations of first distance $L_3$ and second distance $D_3$ on anti-collision performance of battery**

| No. | Second distance $D_2$ (mm) | First distance $L_2$ (mm) | $L_2/D_2$ | Second distance $D_3$ (mm) | First distance $L_3$ (mm) | $L_3/D_3$ | Passed quantity/ tested quantity |
|---|---|---|---|---|---|---|---|
| Example 1 | 0.5 | 0.10 | 1/5 | 0.5 | 0.10 | 1/5 | 7/20 |
| Example 2 | 0.5 | 0.17 | 1/3 | 0.5 | 0.17 | 1/3 | 6/20 |
| Example 3 | 0.5 | 0.25 | 1/2 | 0.5 | 0.25 | 1/2 | 7/20 |
| Example 4 | 0.7 | 0.07 | 1/10 | 0.7 | 0.07 | 1/10 | 7/20 |
| Example 5 | 0.7 | 0.14 | 1/5 | 0.7 | 0.14 | 1/5 | 18/20 |
| Example 6 | 0.7 | 0.23 | 1/3 | 0.7 | 0.23 | 1/3 | 19/20 |
| Example 7 | 0.7 | 0.35 | 1/2 | 0.7 | 0.35 | 1/2 | 19/20 |
| Example 8 | 0.7 | 0.56 | 4/5 | 0.7 | 0.56 | 4/5 | 8/20 |
| Example 9 | 1.0 | 0.10 | 1/10 | 1.0 | 0.10 | 1/10 | 7/20 |
| Example 10 | 1.0 | 0.20 | 1/5 | 1.0 | 0.20 | 1/5 | 20/20 |
| Example 11 | 1.0 | 0.33 | 1/3 | 1.0 | 0.33 | 1/3 | 20/20 |

(continued)

| No. | Second distance D$_2$ (mm) | First distance L$_2$ (mm) | L$_2$/D$_2$ | Second distance D$_3$ (mm) | First distance L$_3$ (mm) | L$_3$/D$_3$ | Passed quantity/ tested quantity |
|---|---|---|---|---|---|---|---|
| Example 12 | 1.0 | 0.50 | 1/2 | 1.0 | 0.50 | 1/2 | 20/20 |
| Example 13 | 1.0 | 0.80 | 4/5 | 1.0 | 0.80 | 4/5 | 8/20 |
| Example 14 | 1.5 | 0.15 | 1/10 | 1.5 | 0.15 | 1/10 | 7/20 |
| Example 15 | 1.5 | 0.30 | 1/5 | 1.5 | 0.30 | 1/5 | 18/20 |
| Example 16 | 1.5 | 0.50 | 1/3 | 1.5 | 0.50 | 1/3 | 19/20 |
| Example 17 | 1.5 | 0.75 | 1/2 | 1.5 | 0.75 | 1/2 | 19/20 |
| Example 18 | 1.5 | 1.20 | 4/5 | 1.5 | 1.20 | 4/5 | 8/20 |
| Example 19 | 1.8 | 0.36 | 1/5 | 1.8 | 0.36 | 1/5 | 10/20 |
| Example 20 | 1.8 | 0.60 | 1/3 | 1.8 | 0.60 | 1/3 | 9/20 |
| Example 21 | 1.8 | 0.90 | 1/2 | 1.8 | 0.90 | 1/2 | 10/20 |

In this embodiment, parameters of the portion of the battery 1 shown in FIG. 5 between the second wall portion unit 132 and the third wall portion unit 133 on two sides opposite along the second direction Y are set according to the foregoing size ranges and ratio ranges, so good effects are achieved. On this basis, it can be easily understood that in some other embodiments of this application, the portion on a single side along the second direction Y may alternatively be set according to the foregoing size ranges and ratio ranges.

In addition, the electrode assembly 200 also cracks into two parts along the first direction X shown in FIG. 5, which causes the risk of puncturing the fourth wall portion unit 134 and the sixth wall portion unit 136 of the housing 100. Therefore, based on the test results, in this embodiment, the relationship between the first distance L$_4$ and the second distance D$_4$ and the relationship between the first distance L$_6$ and the second distance D$_6$ are also set according to the foregoing size ranges and numerical ratios. The first distance L$_4$ is a distance between the fourth side edge 214 and an outer surface of the fourth wall portion unit 134, and the second distance D$_4$ is a distance by which the fourth side edge 214 extends beyond the cathode plate 220. The first distance L$_6$ is a distance between the sixth side edge 216 and an outer surface of the sixth wall portion unit 136, and the sixth distance D$_6$ is a distance by which the sixth side edge 216 extends beyond the cathode plate 220. Specifically, the second distance D$_4$ ranges from 0.7 mm to 1.5 mm, and a ratio of the first distance L$_4$ to the second distance D$_4$ ranges from 1/5 to 1/2; and/or, the second distance D$_6$ ranges from 0.7 mm to 1.5 mm, and a ratio of the first distance L$_6$ to the second distance D$_6$ ranges from 1/5 to 1/2. Similarly, in some embodiments, the first wall portion unit 131 and the fifth wall portion unit 135 can also satisfy the foregoing relationship with the corresponding side edges in the anode plate 210.

In conclusion, in this application, the battery 1 can have a good anti-collision effect, provided that the connecting wall portion 130 includes at least one preset wall portion unit and the preset wall portion unit satisfies: a ratio of a first distance L' to a second distance D' corresponding to one preset wall portion unit ranges from 1/5 to 1/2, and the second distance ranges from 0.7 mm to 1.5 mm. In this application, the "preset wall portion unit" is one of the wall portion units in the connecting wall portion 130, and "the connecting wall portion including at least one preset wall portion unit" means that one or more of the wall portion units in the connecting wall portion 130 are the preset wall portion units. In this application, any one of the first wall portion unit 131, the second wall portion unit 132, the third wall portion unit 133, the fourth wall portion unit 134, the fifth wall portion unit 135, and the sixth wall portion unit 136 can be the preset wall portion unit. When all the first to sixth wall portion units are the preset wall portion units, the battery 1 has the best anti-collision effect. In this application, the "first distance" is the distance between the side edge of the anode plate opposite to the preset wall portion unit and the preset wall portion unit. For example, when the second wall portion unit is the preset wall portion unit, the first distance corresponding to the preset wall portion unit is the first distance $L_2$. For another example, when the third wall portion unit 133 is the preset wall portion unit, the first distance corresponding to the preset wall portion unit is the first distance $L_3$. In this application, the "second distance" is the distance by which the side edge of the anode plate opposite to the preset wall portion unit extends beyond the cathode plate. For example, when the second wall portion unit is the preset wall portion unit, the second distance corresponding to the preset wall portion unit is the second distance $D_2$. For another example, when the third wall portion unit 133 is the preset wall portion unit, the second distance corresponding to the preset wall portion unit is the second distance $D_3$. Finally, it should be noted that in this application, "the first distance and the second distance corresponding to one preset wall portion unit" refer to a first distance and a second distance corresponding to and matching a side edge of the anode plate 210 opposite to a preset wall portion unit. For example, when only the second wall portion unit 132 is the preset wall portion unit, the first distance and the second distance corresponding to the same preset wall portion unit are the first distance and the second distance corresponding to the second side edge, namely, the first distance $L_2$ and the second distance $D_2$. For another example, when both the second wall portion unit 132 and the third wall portion unit 133 are the preset wall portion units, the first distance and the second distance corresponding to the same preset wall portion unit 132 are the matching first distance $L_2$ and second distance $D_3$ and the matching first distance $L_3$ and second distance $D_3$.

Preferably, to ensure that the first distance can provide an enough buffer space, a thickness T of the housing 100 at the connecting wall portion 130 and the first distance L' satisfy $1/7 \leq T/L' \leq 1/3$, where L' may be any one of $L_1$, $L_3$, $L_4$, $L_5$, and $L_6$. $L_1$ is a distance between the first side edge 211 and an outer surface of the first wall portion unit 131, and $L_5$ is a distance between the fifth side edge 215 and an outer surface of the fifth wall portion unit 135.

Within the height range covered by the sealing portion 140, the connecting wall portion 130 and the sealing portion 140 covering the connecting wall portion 130 together form the side wall of the battery 1. In other words, the sealing portion 140 also protects the electrode assembly 200. Therefore, the inventors tested different combinations of the third distance $G_n$ ($n \geq 2$) and the second distance $D_n$, where the third distance $G_n$ is between a side edge of the anode plate 210 and an outer surface of a corresponding side wall unit of the sealing portion 140. A distance between the second side edge 212 and an outer surface of the second side wall unit 142 is the third distance $G_2$, a distance between the third side edge 213 and an outer surface of the third side wall unit 143 is the third distance $G_3$, a distance between the fourth side edge 214 and an outer surface of the fourth side wall unit 144 is the fourth distance $G_4$, a distance between the fifth side edge 215 and an outer surface of the fifth side wall unit 145 is the fifth distance $G_5$, and a distance between the sixth side edge 216 and an outer surface of the sixth side wall unit 146 is the third distance $G_6$.

Table 2 shows influence of different combinations of the third distance $G_2$ and the second distance $D_2$ and different combinations of the third distance $G_3$ and the second distance $D_3$ on anti-collision performance of the battery. From the data in Table 2 and the test method of controlling variables, it can be learned that if the second distance $D_2$ and the second distance $D_3$ are considered as constants for observation, that is, the factors such as the second distance $D_2$ and the second distance $D_3$ are considered as irrelevant variables, and the third distance $G_2$ and the third distance $G_3$ are considered as independent variables, and observed with reference to different groups, when a ratio of the third distance $G_2$ to the second distance $D_2$ ranges from 1/3 to 4/5, significantly more batteries 1 pass the test, which indicates better anti-collision performance of the battery 1. Specifically, when $G_2/D_2 < 1/3$, after the test round bar falls onto the battery 1, the electrode assembly 200 at least partially cracks into two parts opposite along the second direction Y, and these two parts move away from each other along the second direction Y and puncture the second side wall unit 142 and the third side wall unit 143 in a short time. When $G_2/D_2 > 4/5$, after the test round bar falls onto the battery 1, the electrode assembly 200 at least partially cracks into two parts, and these two parts move away from each other along the second direction Y Because $G_2$ is larger, the probability of puncturing the housing 100 is smaller as compared with the former. However, the time for these two parts to move away from each other to come into contact with the corresponding side wall unit is long, so the anode plates 210 and the cathode plates 220 may locally wrinkle due to the relative movement in the process, and puncture the separator 230, resulting in short circuit of the battery 1. In comparison, when $1/3 \leq G_2/D_2 \leq 4/5$, the probabilities of the foregoing two cases are relatively low, so the battery 1 with such setting has better anti-collision performance.

If the ratio of the third distance $G_2$ to the second distance $D_2$ is considered as a constant for observation and the second distance $D_2$ is considered as an independent variable, when the size of the second distance $D_2$ ranges from 0.7 mm to 1.5 mm, significantly more batteries 1 pass the test, which indicates better anti-collision performance of the battery 1. Specifically, when $D_2 < 0.5$ mm, there is a very short time difference between the anode plate 210 and the cathode plate 220 coming into contact with the second side wall unit 142 (or the third side wall unit 143). This means that the second side wall unit 142 (or the third side wall unit 143) is almost simultaneously subjected to the impact forces from the anode plate 210 and the cathode plate 220, resulting in a higher risk of being punctured. Therefore, fewer batteries pass the test. When $D_2 > 1.5$ mm, there is a larger distance between the edges of the anode plate 210 and the cathode plate 220. In other words, before the cathode plate 220 comes into contact with the second side wall unit 142 (or the third side wall unit 143), the cathode plate 220 has a longer movement time, which increases the risk of short circuit caused by the anode plate 210 and the cathode plate 220 wrinkling and puncturing the separator 230. Therefore, fewer batteries 1 pass the test as well. In comparison, when 0.5 mm < $D_2$ < 1.5 mm, compared with the case of $D_2$ < 0.5 mm, there is a longer time difference between the anode plate 210 and the cathode plate 220 coming into contact with the second side wall unit 142 (or the third side wall unit 143); and compared with the case of $D_2$ > 1.5 mm, the time for the cathode plate 220 to move to the second side wall unit 142 (or the third side wall unit 143) is shorter. Therefore, the battery 1 with 0.5 mm < $D_2$ < 1.5 mm has better anti-collision performance.

In conclusion, when the second distance ranges from 0.7 mm to 1.5 mm and the ratio of the third distance to the second distance ranges from 1/3 to 4/5, the battery 1 has excellent anti-collision performance.

**Table 2 Influence of different combinations of third distance $G_2$ and second distance $D_2$ and different combinations of third distance $G_3$ and second distance $D_3$ on anti-collision performance of battery**

| No. | Second distance $D_2$ (mm) | Third distance $G_2$ (mm) | $G_2$/$D_2$ | Second distance $D_3$ (mm) | Second distance $G_3$ (mm) | $G_3$/$D_3$ | Passed quantity/ tested quantity |
|---|---|---|---|---|---|---|---|
| Example 22 | 0.5 | 0.17 | 1/3 | 0.5 | 0.17 | 1/3 | 7/20 |
| Example 23 | 0.5 | 0.25 | 1/2 | 0.5 | 0.25 | 1/2 | 6/20 |
| Example 24 | 0.5 | 0.40 | 4/5 | 0.5 | 0.40 | 4/5 | 7/20 |
| Example 25 | 0.7 | 0.14 | 1/5 | 0.7 | 0.14 | 1/5 | 7/20 |
| Example 26 | 0.7 | 0.23 | 1/3 | 0.7 | 0.23 | 1/3 | 18/20 |
| Example 27 | 0.7 | 0.35 | 1/2 | 0.7 | 0.35 | 1/2 | 19/20 |
| Example 28 | 0.7 | 0.56 | 4/5 | 0.7 | 0.56 | 4/5 | 19/20 |
| Example 29 | 0.7 | 0.70 | 1 | 0.7 | 0.70 | 1 | 8/20 |
| Example 30 | 1.0 | 0.20 | 1/5 | 1.0 | 0.20 | 1/5 | 7/20 |
| Example 31 | 1.0 | 0.33 | 1/3 | 1.0 | 0.33 | 1/3 | 20/20 |
| Example 32 | 1.0 | 0.50 | 1/2 | 1.0 | 0.50 | 1/2 | 20/20 |
| Example 33 | 1.0 | 0.80 | 4/5 | 1.0 | 0.80 | 4/5 | 20/20 |
| Example 34 | 1.0 | 1.00 | 1 | 1.0 | 1.00 | 1 | 8/20 |
| Example 35 | 1.5 | 0.30 | 1/5 | 1.5 | 0.30 | 1/5 | 7/20 |
| Example 36 | 1.5 | 0.50 | 1/3 | 1.5 | 0.50 | 1/3 | 18/20 |
| Example 37 | 1.5 | 0.75 | 1/2 | 1.5 | 0.75 | 1/2 | 19/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Passed quantity/ tested quantity |
|---|---|---|---|---|---|---|---|
| Example 38 | 1.5 | 1.20 | 4/5 | 1.5 | 1.20 | 4/5 | 19/20 |
| Example 39 | 1.5 | 1.50 | 1 | 1.5 | 1.50 | 1 | 8/20 |
| Example 40 | 1.8 | 0.60 | 1/3 | 1.8 | 0.60 | 1/3 | 10/20 |
| Example 41 | 1.8 | 0.90 | 1/2 | 1.8 | 0.90 | 1/2 | 9/20 |
| Example 42 | 1.8 | 1.44 | 4/5 | 1.8 | 1.44 | 4/5 | 10/20 |

In this embodiment, parameters of the portion of the battery 1 shown in FIG. 5 between the second wall portion unit 132 and the third wall portion unit 133 on two sides opposite along the second direction Y are set according to the foregoing size ranges and ratio ranges, so good effects are achieved. On this basis, it can be easily understood that in some other embodiments of this application, only the portion on a single side along the second direction Y may alternatively be set according to the foregoing size ranges and ratio ranges.

In addition, the electrode assembly 200 also cracks into two parts along the first direction Y shown in FIG. 5, which causes the risk of puncturing the fourth side wall unit 144 and the sixth side wall unit 146 of the housing 100. Therefore, based on the test results, in this embodiment, the relationship between the third distance $G_4$ and the second distance $D_4$ and the relationship between the third distance $G_6$ and the second distance $D_6$ are also set according to the foregoing size ranges and numerical ratios. Specifically, the second distance $D_4$ ranges from 0.7 mm to 1.5 mm, and a ratio of the third distance $G_4$ to the second distance $D_4$ ranges from 1/3 to 4/5; and/or, the third distance $G_6$ ranges from 0.7 mm to 1.5 mm, and a ratio of the first distance $L_6$ to the second distance $D_6$ ranges from 1/3 to 4/5. Similarly, in some embodiments, the fifth wall portion unit 135 can also satisfy the foregoing relationship with the fifth side edge 215.

Preferably, to ensure that the third distance can provide an enough buffer space, a thickness T of the housing 100 at the connecting wall portion 130 and the third distance $G_2$ satisfy $1/25 \leq T/G_2 \leq 3/10$. Similarly, such setting is also applicable to other portions of the housing 100. In other words, any one of $G_3$, $G_4$, $G_5$, and $G_6$ can be replaced with $G_2$ in the relational expression.

Further, to avoid large stress at the corner of the battery 1 away from the tab 300 due to the sharp corner which makes the battery 1 occupy a large space and thus be not convenient to install, the sealing portion 140 further includes a first curved side wall unit 147, a second curved side wall unit 148, and a third curved side wall unit 149. Specifically, the second side wall unit 142 is connected to the fourth side wall unit 144 through the first curved side wall unit 147, the third side wall unit 143 is connected to the fourth side wall unit 144 through the second curved side wall unit 148, and the third side wall unit 143 is connected to the sixth side wall unit 146 through the third curved side wall unit 149. The arrangement of the first curved side wall unit 147, the second curved side wall unit 148, and the third curved side wall unit 149 allows for a reduction in the size of the battery 1 at these three corners, thereby reducing interference during installation. In addition, the stress on the curved structure is smaller than that on the sharp corner, so such arrangement can also improve local mechanical performance of the battery 1.

Still further, the second side edge 212 of the anode plate 210 is connected to the fourth side edge 214 through a first curved portion 218a, the third side edge 213 of the anode plate 210 is connected to the fourth side edge 214 through a second curved portion 218b, and the third side edge 213 of the anode plate 210 is connected to the sixth side edge 216 through the third curved portion 218c. The arrangement of the first to third curved side wall units reduces a gap between the anode plate 210 and the sealing portion 140, while the arrangement of the first curved portion 218a, the second curved portion 218b, and the third curved portion 218c is intended to increase this gap to some extent, thereby reducing the risk of the electrode assembly 200 being prone to puncture the connecting wall portion 130 and the sealing portion 140 when the battery 1 is impacted.

Next, based on the test method in the Table 2, the inventors further tested the variable of curved side wall unit introduced into each group of test. Table 3 shows influence of different combinations of the third distance $G_2$ and the second distance $D_2$, different combinations of the third distance $G_3$ and the second distance $D_3$, and fillet radii of the curved side wall units on anti-collision performance of the battery. In this test, in a same embodiment, the first curved side wall unit 147, the second curved side wall unit 148, and the third curved side wall unit 149 have a same fillet radius. For the measurement manner of the fillet radius, it should be noted that in this application, fillet radii of outer surfaces of the first to third curved side wall units 149 are measured using a three-dimensional contour measuring instrument. Certainly, in other embodiments of this application, other measuring tools such as an R gauge can also be used for measurement.

From the data in Table 3 and the test method of controlling variables, it can be learned that if the second distance $D_2$, the second distance $D_3$, the third distance $G_2$, and the third distance $G_3$ are considered as constants for observation, that is, the second distance s and the third distance s are considered as irrelevant variables, and the fillet radii R of the curved side wall units are considered as independent variables, and observed with reference to different groups, when a ratio of the fillet radius R to a sum of the third distance $G_2$ and the second distance $D_2$ ranges from 0.85 to 1.0, significantly more batteries 1 pass the test, which indicates better anti-collision performance of the battery 1.

**Table 3 Influence of different combinations of third distance $G_2$ and second distance $D_2$, different combinations of third distance $G_3$ and second distance $D_3$, and different combinations of fillet radii R (fillet radii of first curved side wall unit, second curved side wall unit, and third curved side wall unit) on anti-collision performance of battery**

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/ ($G_2$+ $D_2$) | Passed quantity /tested quantity |
|---|---|---|---|---|---|---|---|---|---|
| Example 43 | 0.5 | 0.10 | 1/5 | 0.5 | 0.10 | 1/5 | 0.48 | 0.80 | 3/20 |
| Example 44 | 0.5 | 0.17 | 1/3 | 0.5 | 0.17 | 1/3 | 0.54 | 0.80 | 2/20 |
| Example 45 | 0.5 | 0.25 | 1/2 | 0.5 | 0.25 | 1/2 | 0.60 | 0.80 | 3/20 |
| Example 46 | 0.5 | 0.40 | 4/5 | 0.5 | 0.40 | 4/5 | 0.72 | 0.80 | 4/20 |
| Example 47 | 0.5 | 0.50 | 1 | 0.5 | 0.50 | 1 | 0.80 | 0.80 | 3/20 |
| Example 48 | 0.5 | 0.10 | 1/5 | 0.5 | 0.10 | 1/5 | 0.51 | 0.85 | 3/20 |
| Example 49 | 0.5 | 0.17 | 1/3 | 0.5 | 0.17 | 1/3 | 0.57 | 0.85 | 4/20 |
| Example 50 | 0.5 | 0.25 | 1/2 | 0.5 | 0.25 | 1/2 | 0.64 | 0.85 | 4/20 |
| Example 51 | 0.5 | 0.40 | 4/5 | 0.5 | 0.40 | 4/5 | 0.77 | 0.85 | 5/20 |
| Example 52 | 0.5 | 0.50 | 1 | 0.5 | 0.50 | 1 | 0.85 | 0.85 | 5/20 |
| Example 53 | 0.5 | 0.10 | 1/5 | 0.5 | 0.10 | 1/5 | 0.57 | 0.95 | 4/20 |
| Example 54 | 0.5 | 0.17 | 1/3 | 0.5 | 0.17 | 1/3 | 0.64 | 0.95 | 4/20 |
| Example 55 | 0.5 | 0.25 | 1/2 | 0.5 | 0.25 | 1/2 | 0.71 | 0.95 | 5/20 |
| Example 56 | 0.5 | 0.40 | 4/5 | 0.5 | 0.40 | 4/5 | 0.86 | 0.95 | 6/20 |
| Example 57 | 0.5 | 0.50 | 1 | 0.5 | 0.50 | 1 | 0.95 | 0.95 | 4/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/ ($G_2$+ $D_2$) | Passed quantity /tested quantity |
|---|---|---|---|---|---|---|---|---|---|
| Example 58 | 0.5 | 0.10 | 1/5 | 0.5 | 0.10 | 1/5 | 0.60 | 1.0 | 4/20 |
| Example 59 | 0.5 | 0.17 | 1/3 | 0.5 | 0.17 | 1/3 | 0.67 | 1.0 | 5/20 |
| Example 60 | 0.5 | 0.25 | 1/2 | 0.5 | 0.25 | 1/2 | 0.75 | 1.0 | 5/20 |
| Example 61 | 0.5 | 0.40 | 4/5 | 0.5 | 0.40 | 4/5 | 0.90 | 1.0 | 5/20 |
| Example 62 | 0.5 | 0.50 | 1 | 0.5 | 0.50 | 1 | 1.00 | 1.0 | 6/20 |
| Example 63 | 0.5 | 0.10 | 1/5 | 0.5 | 0.10 | 1/5 | 0.63 | 1.05 | 2/20 |
| Example 64 | 0.5 | 0.17 | 1/3 | 0.5 | 0.17 | 1/3 | 0.70 | 1.05 | 2/20 |
| Example 65 | 0.5 | 0.25 | 1/2 | 0.5 | 0.25 | 1/2 | 0.79 | 1.05 | 3/20 |
| Example 66 | 0.5 | 0.40 | 4/5 | 0.5 | 0.40 | 4/5 | 0.95 | 1.05 | 2/20 |
| Example 67 | 0.5 | 0.50 | 1 | 0.5 | 0.50 | 1 | 1.05 | 1.05 | 8/20 |
| Example 68 | 0.7 | 0.23 | 1/3 | 0.7 | 0.23 | 1/3 | 0.74 | 0.80 | 6/20 |
| Example 69 | 0.7 | 0.35 | 1/2 | 0.7 | 0.35 | 1/2 | 0.84 | 0.80 | 8/20 |
| Example 70 | 0.7 | 0.56 | 4/5 | 0.7 | 0.56 | 4/5 | 1.01 | 0.80 | 8/20 |
| Example 71 | 0.7 | 0.70 | 1 | 0.7 | 0.70 | 1 | 1.12 | 0.80 | 7/20 |
| Example 72 | 0.7 | 0.14 | 1/5 | 0.7 | 0.14 | 1/5 | 0.71 | 0.85 | 10/20 |
| Example 73 | 0.7 | 0.23 | 1/3 | 0.7 | 0.23 | 1/3 | 0.79 | 0.85 | 19/20 |
| Example 74 | 0.7 | 0.35 | 1/2 | 0.7 | 0.35 | 1/2 | 0.89 | 0.85 | 19/20 |
| Example 75 | 0.7 | 0.56 | 4/5 | 0.7 | 0.56 | 4/5 | 1.07 | 0.85 | 19/20 |
| Example 76 | 0.7 | 0.70 | 1 | 0.7 | 0.70 | 1 | 1.19 | 0.85 | 11/20 |
| Example 77 | 0.7 | 0.14 | 1/5 | 0.7 | 0.14 | 1/5 | 0.80 | 0.95 | 10/20 |
| Example 78 | 0.7 | 0.23 | 1/3 | 0.7 | 0.23 | 1/3 | 0.88 | 0.95 | 20/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/ $(G_2+ D_2)$ | Passed quantity /tested quantity |
|---|---|---|---|---|---|---|---|---|---|
| Example 79 | 0.7 | 0.35 | 1/2 | 0.7 | 0.35 | 1/2 | 1.00 | 0.95 | 20/20 |
| Example 80 | 0.7 | 0.56 | 4/5 | 0.7 | 0.56 | 4/5 | 1.20 | 0.95 | 20/20 |
| Example 81 | 0.7 | 0.70 | 1 | 0.7 | 0.70 | 1 | 1.33 | 0.95 | 9/20 |
| Example 82 | 0.7 | 0.14 | 1/5 | 0.7 | 0.14 | 1/5 | 0.84 | 1.0 | 12/20 |
| Example 83 | 0.7 | 0.23 | 1/3 | 0.7 | 0.23 | 1/3 | 0.93 | 1.0 | 20/20 |
| Example 84 | 0.7 | 0.35 | 1/2 | 0.7 | 0.35 | 1/2 | 1.05 | 1.0 | 20/20 |
| Example 85 | 0.7 | 0.56 | 4/5 | 0.7 | 0.56 | 4/5 | 1.26 | 1.0 | 20/20 |
| Example 86 | 0.7 | 0.70 | 1 | 0.7 | 0.70 | 1 | 1.40 | 1.0 | 13/20 |
| Example 87 | 0.7 | 0.14 | 1/5 | 0.7 | 0.14 | 1/5 | 0.88 | 1.05 | 8/20 |
| Example 88 | 0.7 | 0.23 | 1/3 | 0.7 | 0.23 | 1/3 | 0.98 | 1.05 | 10/20 |
| Example 89 | 0.7 | 0.35 | 1/2 | 0.7 | 0.35 | 1/2 | 1.10 | 1.05 | 9/20 |
| Example 90 | 0.7 | 0.56 | 4/5 | 0.7 | 0.56 | 4/5 | 1.32 | 1.05 | 11/20 |
| Example 91 | 0.7 | 0.70 | 1 | 0.7 | 0.70 | 1 | 1.47 | 1.05 | 8/20 |
| Example 92 | 1.0 | 0.2 | 1/5 | 1.0 | 0.2 | 1/5 | 0.96 | 0.80 | 4/20 |
| Example 93 | 1.0 | 0.33 | 1/3 | 1.0 | 0.33 | 1/3 | 1.06 | 0.80 | 6/20 |
| Example 94 | 1.0 | 0.50 | 1/2 | 1.0 | 0.50 | 1/2 | 1.20 | 0.80 | 8/20 |
| Example 95 | 1.0 | 0.80 | 4/5 | 1.0 | 0.80 | 4/5 | 1.44 | 0.80 | 8/20 |
| Example 96 | 1.0 | 1.00 | 1 | 1.0 | 1.00 | 1 | 1.60 | 0.80 | 7/20 |
| Example 97 | 1.0 | 0.2 | 1/5 | 1.0 | 0.2 | 1/5 | 1.02 | 0.85 | 10/20 |
| Example 98 | 1.0 | 0.33 | 1/3 | 1.0 | 0.33 | 1/3 | 1.13 | 0.85 | 19/20 |
| Example 99 | 1.0 | 0.50 | 1/2 | 1.0 | 0.50 | 1/2 | 1.28 | 0.85 | 19/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/($G_2$+$D_2$) | Passed quantity /tested quantity |
|---|---|---|---|---|---|---|---|---|---|
| Example 100 | 1.0 | 0.80 | 4/5 | 1.0 | 0.80 | 4/5 | 1.53 | 0.85 | 19/20 |
| Example 101 | 1.0 | 1.00 | 1 | 1.0 | 1.00 | 1 | 1.70 | 0.85 | 11/20 |
| Example 102 | 1.0 | 0.2 | 1/5 | 1.0 | 0.2 | 1/5 | 1.14 | 0.95 | 10/20 |
| Example 103 | 1.0 | 0.33 | 1/3 | 1.0 | 0.33 | 1/3 | 1.26 | 0.95 | 20/20 |
| Example 104 | 1.0 | 0.50 | 1/2 | 1.0 | 0.50 | 1/2 | 1.43 | 0.95 | 20/20 |
| Example 105 | 1.0 | 0.80 | 4/5 | 1.0 | 0.80 | 4/5 | 1.71 | 0.95 | 20/20 |
| Example 106 | 1.0 | 1.00 | 1 | 1.0 | 1.00 | 1 | 1.90 | 0.95 | 9/20 |
| Example 107 | 1.0 | 0.2 | 1/5 | 1.0 | 0.2 | 1/5 | 1.20 | 1.0 | 12/20 |
| Example 108 | 1.0 | 0.33 | 1/3 | 1.0 | 0.33 | 1/3 | 1.33 | 1.0 | 20/20 |
| Example 109 | 1.0 | 0.50 | 1/2 | 1.0 | 0.50 | 1/2 | 1.50 | 1.0 | 20/20 |
| Example 110 | 1.0 | 0.80 | 4/5 | 1.0 | 0.80 | 4/5 | 1.80 | 1.0 | 20/20 |
| Example 111 | 1.0 | 1.00 | 1 | 1.0 | 1.00 | 1 | 200 | 1.0 | 13/20 |
| Example 112 | 1.0 | 0.2 | 1/5 | 1.0 | 0.2 | 1/5 | 1.26 | 1.05 | 8/20 |
| Example 113 | 1.0 | 0.33 | 1/3 | 1.0 | 0.33 | 1/3 | 1.40 | 1.05 | 10/20 |
| Example 114 | 1.0 | 0.50 | 1/2 | 1.0 | 0.50 | 1/2 | 1.58 | 1.05 | 9/20 |
| Example 115 | 1.0 | 0.80 | 4/5 | 1.0 | 0.80 | 4/5 | 1.89 | 1.05 | 11/20 |
| Example 116 | 1.0 | 1.00 | 1 | 1.0 | 1.00 | 1 | 2.10 | 1.05 | 8/20 |
| Example 117 | 1.5 | 0.30 | 1/5 | 1.5 | 0.30 | 1/5 | 1.44 | 0.80 | 4/20 |
| Example 118 | 1.5 | 0.50 | 1/3 | 1.5 | 0.50 | 1/3 | 1.60 | 0.80 | 6/20 |
| Example 119 | 1.5 | 0.75 | 1/2 | 1.5 | 0.75 | 1/2 | 1.80 | 0.80 | 8/20 |
| Example 120 | 1.5 | 1.20 | 4/5 | 1.5 | 1.20 | 4/5 | 2.16 | 0.80 | 8/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/ $(G_2 + D_2)$ | Passed quantity /tested quantity |
|---|---|---|---|---|---|---|---|---|---|
| Example 121 | 1.5 | 1.50 | 1 | 1.5 | 1.50 | 1 | 2.40 | 0.80 | 7/20 |
| Example 122 | 1.5 | 0.30 | 1/5 | 1.5 | 0.30 | 1/5 | 1.53 | 0.85 | 10/20 |
| Example 123 | 1.5 | 0.50 | 1/3 | 1.5 | 0.50 | 1/3 | 1.70 | 0.85 | 19/20 |
| Example 124 | 1.5 | 0.75 | 1/2 | 1.5 | 0.75 | 1/2 | 1.91 | 0.85 | 19/20 |
| Example 125 | 1.5 | 1.20 | 4/5 | 1.5 | 1.20 | 4/5 | 2.30 | 0.85 | 19/20 |
| Example 126 | 1.5 | 1.50 | 1 | 1.5 | 1.50 | 1 | 2.55 | 0.85 | 11/20 |
| Example 127 | 1.5 | 0.30 | 1/5 | 1.5 | 0.30 | 1/5 | 1.71 | 0.95 | 10/20 |
| Example 128 | 1.5 | 0.50 | 1/3 | 1.5 | 0.50 | 1/3 | 1.90 | 0.95 | 20/20 |
| Example 129 | 1.5 | 0.75 | 1/2 | 1.5 | 0.75 | 1/2 | 2.14 | 0.95 | 20/20 |
| Example 130 | 1.5 | 1.20 | 4/5 | 1.5 | 1.20 | 4/5 | 2.57 | 0.95 | 20/20 |
| Example 131 | 1.5 | 1.50 | 1 | 1.5 | 1.50 | 1 | 2.85 | 0.95 | 9/20 |
| Example 132 | 1.5 | 0.30 | 1/5 | 1.5 | 0.30 | 1/5 | 1.80 | 1.0 | 12/20 |
| Example 133 | 1.5 | 0.50 | 1/3 | 1.5 | 0.50 | 1/3 | 2.00 | 1.0 | 20/20 |
| Example 134 | 1.5 | 0.75 | 1/2 | 1.5 | 0.75 | 1/2 | 2.25 | 1.0 | 20/20 |
| Example 135 | 1.5 | 1.20 | 4/5 | 1.5 | 1.20 | 4/5 | 2.70 | 1.0 | 20/20 |
| Example 136 | 1.5 | 1.50 | 1 | 1.5 | 1.50 | 1 | 300 | 1.0 | 13/20 |
| Example 137 | 1.5 | 0.30 | 1/5 | 1.5 | 0.30 | 1/5 | 1.89 | 1.05 | 8/20 |
| Example 138 | 1.5 | 0.50 | 1/3 | 1.5 | 0.50 | 1/3 | 2.10 | 1.05 | 10/20 |
| Example 139 | 1.5 | 0.75 | 1/2 | 1.5 | 0.75 | 1/2 | 2.36 | 1.05 | 9/20 |
| Example 140 | 1.5 | 1.20 | 4/5 | 1.5 | 1.20 | 4/5 | 2.84 | 1.05 | 11/20 |
| Example 141 | 1.5 | 1.50 | 1 | 1.5 | 1.50 | 1 | 3.15 | 1.05 | 8/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/ ($G_2$+ $D_2$) | Passed quantity /tested quantity |
|---|---|---|---|---|---|---|---|---|---|
| Example 142 | 1.8 | 0.36 | 1/5 | 1.8 | 0.36 | 1/5 | 1.73 | 0.80 | 3/20 |
| Example 143 | 1.8 | 0.60 | 1/3 | 1.8 | 0.60 | 1/3 | 1.92 | 0.80 | 2/20 |
| Example 144 | 1.8 | 0.90 | 1/2 | 1.8 | 0.90 | 1/2 | 2.16 | 0.80 | 3/20 |
| Example 145 | 1.8 | 1.44 | 4/5 | 1.8 | 1.44 | 4/5 | 2.59 | 0.80 | 4/20 |
| Example 146 | 1.8 | 1.80 | 1 | 1.8 | 1.80 | 1 | 2.88 | 0.80 | 3/20 |
| Example 147 | 1.8 | 0.36 | 1/5 | 1.8 | 0.36 | 1/5 | 1.84 | 0.85 | 3/20 |
| Example 148 | 1.8 | 0.60 | 1/3 | 1.8 | 0.60 | 1/3 | 2.04 | 0.85 | 4/20 |
| Example 149 | 1.8 | 0.90 | 1/2 | 1.8 | 0.90 | 1/2 | 2.30 | 0.85 | 4/20 |
| Example 150 | 1.8 | 1.44 | 4/5 | 1.8 | 1.44 | 4/5 | 2.75 | 0.85 | 5/20 |
| Example 151 | 1.8 | 1.80 | 1 | 1.8 | 1.80 | 1 | 3.06 | 0.85 | 5/20 |
| Example 152 | 1.8 | 0.36 | 1/5 | 1.8 | 0.36 | 1/5 | 2.05 | 0.95 | 4/20 |
| Example 153 | 1.8 | 0.60 | 1/3 | 1.8 | 0.60 | 1/3 | 2.28 | 0.95 | 4/20 |
| Example 154 | 1.8 | 0.90 | 1/2 | 1.8 | 0.90 | 1/2 | 2.57 | 0.95 | 5/20 |
| Example 155 | 1.8 | 1.44 | 4/5 | 1.8 | 1.44 | 4/5 | 3.08 | 0.95 | 6/20 |
| Example 156 | 1.8 | 1.80 | 1 | 1.8 | 1.80 | 1 | 3.42 | 0.95 | 4/20 |
| Example 157 | 1.8 | 0.36 | 1/5 | 1.8 | 0.36 | 1/5 | 2.16 | 1.0 | 4/20 |
| Example 158 | 1.8 | 0.60 | 1/3 | 1.8 | 0.60 | 1/3 | 2.40 | 1.0 | 5/20 |
| Example 159 | 1.8 | 0.90 | 1/2 | 1.8 | 0.90 | 1/2 | 2.70 | 1.0 | 5/20 |
| Example 160 | 1.8 | 1.44 | 4/5 | 1.8 | 1.44 | 4/5 | 3.24 | 1.0 | 5/20 |
| Example 161 | 1.8 | 1.80 | 1 | 1.8 | 1.80 | 1 | 3.60 | 1.0 | 6/20 |
| Example 162 | 1.8 | 0.36 | 1/5 | 1.8 | 0.36 | 1/5 | 2.27 | 1.05 | 2/20 |

(continued)

| No. | Second distance $D_2$ (mm) | Third distance $G_2$ (mm) | $G_2/D_2$ | Second distance $D_3$ (mm) | Second distance $G_3$ (mm) | $G_3/D_3$ | Fillet radius R (mm) | R/ ($G_2$+ $D_2$) | Passed quantity /tested quantity |
|---|---|---|---|---|---|---|---|---|---|
| Example 163 | 1.8 | 0.60 | 1/3 | 1.8 | 0.60 | 1/3 | 2.52 | 1.05 | 2/20 |
| Example 164 | 1.8 | 0.90 | 1/2 | 1.8 | 0.90 | 1/2 | 2.84 | 1.05 | 3/20 |
| Example 165 | 1.8 | 1.44 | 4/5 | 1.8 | 1.44 | 4/5 | 3.40 | 1.05 | 2/20 |

It should be understood that even if the second distance $D_2$ and the second distance $D_3$ having the same size and the third distance $G_2$ and the third distance $G_3$ having the same size is used as an example for testing in this test, in other embodiments of this application, the second distance $D_2$ may alternatively be different from the second distance $D_3$, and the third distance $G_2$ may alternatively be different from the third distance $G_3$. For example, $0.8 \leq G_2/G_3 < 1$ and $1 < G_2/G_3 \leq 1.2$. In this case, the fillet radii of the curved side wall units correspondingly satisfy $0.85(G_2 + D_2) \leq R_1 \leq 1.0(G_2 + D_2)$, $0.85(G_3 + D_3) \leq R_2 \leq 1.0(G_3 + D_3)$, and $0.85(G_3 + D_3) \leq R_3 \leq 1.0(G_3 + D_3)$. $R_1$ represents a radius of an outer surface of the first curved side wall unit 147, $R_2$ represents a radius of an outer surface of the second curved side wall unit 148, and $R_3$ represents a radius of an outer surface of the third curved side wall unit 149.

In conclusion, the battery 1 according to some embodiments of this application includes a housing 100, an electrode assembly 200, and 300. The housing 100 includes an L-shaped first end wall 110, an L-shaped second end wall 120, and a connecting wall portion 130 extending from the first end wall 110 to the second end wall 120. In other words, the entire housing 100 is L-shaped. Therefore, when the battery 1 is used for an electronic apparatus having an L-shaped battery compartment, two parts bent to each other in the battery 1 can be filled in two chambers of the L-shaped battery compartment respectively, so as to better use the L-shaped battery compartment. In other words, the battery according to some embodiments of this application can improve the current situation that the L-shaped battery compartment in the electronic apparatus cannot be well used for batteries.

In addition, the connecting wall portion 130 includes at least one preset wall portion unit, and a ratio of a first distance to a second distance corresponding to the preset wall portion unit ranges from 1/5 to 1/2, where the second distance ranges from 0.7 mm to 1.5 mm. Such setting is conducive to improving anti-collision performance of the battery 1.

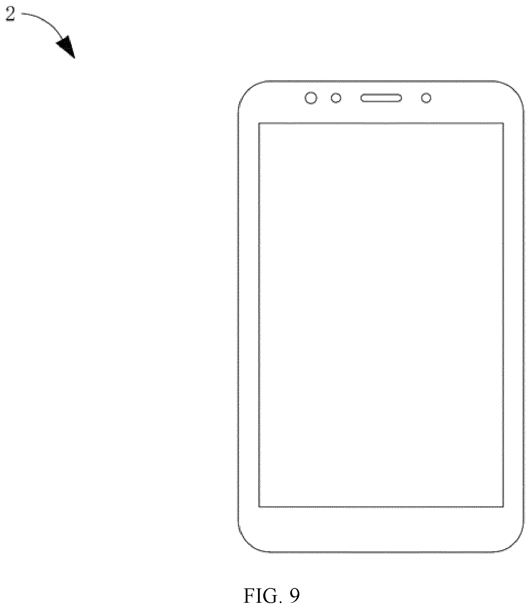

Based on the same inventive concept, another embodiment of this application further provides an electronic apparatus 2. Specifically referring to FIG. 9 which is a schematic diagram of the electronic apparatus 2, and with reference to FIG. 1 to FIG. 4, the electronic apparatus 2 includes the battery 1 in the foregoing embodiments. In this embodiment, the electronic apparatus 2 is a mobile phone. It can be understood that, in other embodiments of this application, the electronic apparatus 2 may alternatively be a tablet computer, a computer, a drone, and other electronic apparatuses that need to be driven by electricity.

The battery in the electronic apparatus 2 can improve the current situation that the L-shaped battery compartment in the electronic apparatus cannot be well used for batteries.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

**Claims**

1. A battery comprising a housing, an electrode assembly, and tabs electrically connected to the electrode assembly; wherein the housing comprises:

an L-shaped first end wall;

an L-shaped second end wall spaced apart from the first end wall in a thickness direction of the battery; and

a connecting wall portion extending from an edge of the first end wall to the second end wall and enclosing an L-shaped accommodating cavity, wherein the first end wall is provided as one end of the accommodating cavity, the second end wall is provided as another end of the accommodating cavity, the connecting wall portion comprises a plurality of wall portion units, and the plurality of wall portion units are arranged sequentially along a contour of the edge of the first end wall; **characterized in that**

the electrode assembly is L-shaped; the electrode assembly comprises an anode plate, a cathode plate, and a separator disposed between the anode plate and the cathode plate, and the anode plate and the cathode plate are stacked alternately in the thickness direction, with an edge of the anode plate surrounding a projection of the cathode plate on the anode plate; and

the plurality of wall portion units comprise a preset wall portion unit, a side edge of the anode plate opposite to the preset wall portion unit is spaced apart from the preset wall portion unit by a first distance ; the side edge of the anode plate opposite to the preset wall portion unit extends beyond the cathode plate by a second distance, and a ratio of the first distance to the second distance corresponding to the preset wall portion unit ranges from 1/5 to 1/2, wherein the second distance ranges from 0.7 mm to 1.5 mm.

2. The battery according to claim 1, wherein the plurality of wall portion units comprise a first wall portion unit, a second wall portion unit, a third wall portion unit, a fourth wall portion unit, a fifth wall portion unit, and a sixth wall portion unit; wherein

the first wall portion unit, the second wall portion unit, and the third wall portion unit extend along a first direction and are spaced apart from each other sequentially in a second direction, a length of the third wall portion unit extending along the first direction is greater than lengths of the first wall portion unit and the second wall portion unit extending along the first direction, and the tab extends out of the housing from the first wall portion unit, wherein both the first direction and the second direction are perpendicular to the thickness direction, and the first direction intersects the second direction; and

the fourth wall portion unit, the fifth wall portion unit, and the sixth wall portion unit extend along the second direction and are spaced apart from each other sequentially in the first direction, and a length of the sixth wall portion unit extending along the second direction is greater than lengths of the fourth wall portion unit and the fifth wall portion unit extending along the second direction.

3. The battery according to claim 2, wherein at least one of the second wall portion unit, the third wall portion unit, the fourth wall portion unit, the fifth wall portion unit, or the sixth wall portion unit is the preset wall portion unit.

4. The battery according to claim 2, wherein the housing further comprises a sealing portion extending from the connecting wall portion, wherein at least a part of the sealing portion is bent to extend toward the first end wall, and the sealing portion comprises:

a second side wall unit extending from the second wall portion unit toward the first end wall; and

a third side wall unit extending from the third wall portion unit toward the first end wall.

5. The battery according to claim 4, wherein

the anode plate has a second side edge opposite to the second wall portion unit, a distance between the second side edge and an outer surface of the second side wall unit is $G_2$, the second side edge extends beyond the cathode plate by a distance $D_2$, and $1/3 \leq G_2/D_2 \leq 4/5$, wherein $0.7 \text{ mm} \leq D_2 \leq 1.5 \text{ mm}$; and/or

the anode plate has a third side edge opposite to the third wall portion unit, a distance between the third side edge and an outer surface of the third side wall unit is $G_3$, the third side edge extends beyond the cathode plate by a distance $D_3$, and $1/3 \leq G_3/D_3 \leq 4/5$, wherein $0.7 \text{ mm} \leq D_3 \leq 1.5 \text{ mm}$.

6. The battery according to claim 5, wherein the sealing portion further comprises:

a fourth side wall unit extending from the fourth wall portion unit toward the first end wall; and

a sixth side wall unit extending from the sixth wall portion unit toward the first end wall.

7. The battery according to claim 6, wherein

the anode plate has a fourth side edge opposite to the fourth wall portion unit, a distance between the fourth side edge and an outer surface of the fourth side wall unit is $G_4$, the fourth side edge extends beyond the cathode plate by a distance $D_4$, and $1/3 \leq G_4/D_4 \leq 4/5$, wherein $0.7 \text{ mm} \leq D_4 \leq 1.5 \text{ mm}$; and/or

the anode plate has a sixth side edge opposite to the sixth wall portion unit, a distance between the sixth side edge and an outer surface of the sixth side wall unit is $G_6$, the sixth side edge extends beyond the cathode plate by a distance $D_6$, and $1/3 \leq G_6/D_6 \leq 4/5$, wherein $0.7 \text{ mm} \leq D_6 \leq 1.5 \text{ mm}$.

8.  The battery according to claim 7, wherein

the sealing portion further comprises a first curved side wall unit; the second side wall unit is connected to the fourth side wall unit through the first curved side wall unit, a radius $R_1$ of the first curved side wall unit satisfies $0.85(G_2 + D_2) \leq R_1 \leq 1.0(G_2 + D_2)$, and the second side edge is connected to the fourth side edge through a first curved portion; and/or

the sealing portion further comprises a second curved side wall unit, the third side wall unit is connected to the fourth side wall unit through the second curved side wall unit, a radius $R_2$ of the second curved side wall unit satisfies $0.85(G_3 + D_3) \leq R_2 \leq 1.0(G_3 + D_3)$, the anode plate has the third side edge opposite to the third wall portion unit, and the third side edge is connected to the fourth side edge through a second curved portion; and/or

the sealing portion further comprises a third curved side wall unit, the third side wall unit is connected to the sixth side wall unit through the third curved side wall unit, a radius $R_3$ of the first curved side wall unit satisfies $0.85(G_3 + D_3) \leq R_3 \leq 1.0(G_3 + D_3)$, and the third side edge is connected to the sixth side edge through a third curved portion.

9.  The battery according to claim 7, wherein a distance between the second side edge and the second wall portion unit is $L_2$, and a thickness T of the connecting wall portion satisfies:

$$1/7 \leq T/L_2 \leq 1/3;$$

and/or

$$1/25 \leq T/G_2 \leq 3/10.$$

10. The battery according to claim 4, wherein the part of the sealing portion bent to extend toward the first end wall is adhesively fixed to the connecting wall portion.

11. An electronic apparatus, comprising the battery according to any one of claims 1 to 10.

FIG. 1

FIG. 2

FIG. 3

FIG. 4

FIG. 5

FIG. 6

FIG. 7

FIG. 8

2

FIG. 9

<table>
<tr><td colspan="2">**INTERNATIONAL SEARCH REPORT**</td><td colspan="2">International application No.<br>**PCT/CN2021/135125**</td></tr>
</table>

**A. CLASSIFICATION OF SUBJECT MATTER**

H01M 10/058(2010.01)i; H01M 50/102(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 壳体, 电极, 极耳, 端壁, L形, 腔体, batter+, housing, electrode, tab, end wall, L-shap +, cavity

**C. DOCUMENTS CONSIDERED TO BE RELEVANT**

| Category* | Citation of document, with indication, where appropriate, of the relevant passages | Relevant to claim No. |
|---|---|---|
| A | WO 2021195852 A1 (NINGDE AMPEREX TECHNOLOGY LTD.) 07 October 2021 (2021-10-07)<br>description, page 6 paragraph 5-page 13 paragraph 4, and figures 1-5 | 1-11 |
| A | WO 2021195924 A1 (NINGDE AMPEREX TECHNOLOGY LTD.) 07 October 2021 (2021-10-07)<br>entire document | 1-11 |
| A | CN 108206247 A (XI'AN ZTE NEW SOFTWARE CO., LTD.) 26 June 2018 (2018-06-26)<br>entire document | 1-11 |
| A | WO 2021195909 A1 (NINGDE AMPEREX TECHNOLOGY LTD.) 07 October 2021 (2021-10-07)<br>entire document | 1-11 |
| A | CN 111584920 A (GUANGDONG OPPO MOBILE COMMUNICATIONS CO., LTD.) 25 August 2020 (2020-08-25)<br>entire document | 1-11 |
| A | CN 108899600 A (CHINA ELECTRIC POWER RESEARCH INSTITUTE CO., LTD. et al.) 27 November 2018 (2018-11-27)<br>entire document | 1-11 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 August 2022** | **26 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/135125**

**C.      DOCUMENTS CONSIDERED TO BE RELEVANT**

| Category* | Citation of document, with indication, where appropriate, of the relevant passages | Relevant to claim No. |
|---|---|---|
| A | JP 2016162533 A (TOYOTA INDUSTRIES CORP.) 05 September 2016 (2016-09-05) entire document | 1-11 |

Form PCT/ISA/210 (second sheet) (January 2015)

**INTERNATIONAL SEARCH REPORT**
Information on patent family members

International application No.

**PCT/CN2021/135125**

| Patent document cited in search report | | | Publication date (day/month/year) | Patent family member(s) | | | Publication date (day/month/year) |
|---|---|---|---|---|---|---|---|
| WO | 2021195852 | A1 | 07 October 2021 | None | | | |
| WO | 2021195924 | A1 | 07 October 2021 | CN | 113994519 | A | 28 January 2022 |
| CN | 108206247 | A | 26 June 2018 | WO | 2019076223 | A1 | 25 April 2019 |
| | | | | US | 2021194083 | A1 | 24 June 2021 |
| | | | | EP | 3699973 | A1 | 26 August 2020 |
| | | | | CN | 108206247 | B | 11 May 2021 |
| | | | | EP | 3699973 | A4 | 04 August 2021 |
| WO | 2021195909 | A1 | 07 October 2021 | None | | | |
| CN | 111584920 | A | 25 August 2020 | CN | 111584920 | B | 16 November 2021 |
| CN | 108899600 | A | 27 November 2018 | None | | | |
| JP | 2016162533 | A | 05 September 2016 | JP | 6464820 | B2 | 06 February 2019 |

Form PCT/ISA/210 (patent family annex) (January 2015)